(19) Europäisches Patentamt
European Patent Office
Office européen des brevets

(11) EP 0 590 730 B1

(12) **EUROPEAN PATENT SPECIFICATION**

(45) Date of publication and mention
of the grant of the patent:
**06.08.1997 Bulletin 1997/32**

(51) Int Cl.6: **G01N 35/10**, G01N 35/00,
B01L 3/02

(21) Application number: **93202782.4**

(22) Date of filing: **28.09.1993**

(54) **Aspirator probes**

Ansaugpipetten

Sondes d'aspiration

(84) Designated Contracting States:
**BE CH DE FR GB IE IT LI LU NL**

(30) Priority: **30.09.1992 US 954632**
**03.02.1993 US 12681**

(43) Date of publication of application:
**06.04.1994 Bulletin 1994/14**

(73) Proprietor: **Johnson & Johnson Clinical
Diagnostics, Inc.
Rochester New York 14650 (US)**

(72) Inventors:
• **Marvin, Russel Hugh,
c/o Eastman Kodak Company
Rochester, New York 14650-2201 (US)**
• **Shaw, James David,
c/o Eastman Kodak Company
Rochester, New York 14650-2201 (US)**

(74) Representative: **Mercer, Christopher Paul et al
Carpmaels & Ransford
43, Bloomsbury Square
London WC1A 2RA (GB)**

(56) References cited:
WO-A-91/12077         FR-A- 2 171 453
US-A- 4 340 390       US-A- 4 347 750
US-A- 5 021 217

## Description

This invention relates to aspirator probes, and is more concerned with stations at which they are vertically mounted to dispense liquid, especially in clinical analyzers.

Clinical analyzers conventionally use an aspirator probe to aspirate sample into a disposable tip, and then dispense some of that sample onto a slide element that has dried reagents therein. Such a sequence is schematically illustrated in, for example US-A-4 340 390.

It is also conventional to provide for some compliance in the horizontal mounting of the probe to allow for slight displacement errors in the seating of the tip at, for example, the sample dispensing station, as seen in US-A-4 347 750 and US-A-5 021 217. Such compliance is conventionally achieved using a vertically depending, pivotable spring positioned a short distance above the seating surface of the tip, the spring allowing for the horizontal displacement.

Such a design has worked well in most instances. However, occasionally there is a problem due to the amount of horizontal displacement incurred at the sample dispensing station. Although structure is provided to accurately "seat" the tip for dispensing, notwithstanding such displacement, when the tip starts to withdraw, the displacement force is still present and acts to slightly pivot the tip above its vertical axis.

Furthermore, with some chemistries, if the dispensed sample has not been completely absorbed, this pivoting can lead to what is called "tip flick". In particular, the residual liquid above the surface of the slide is flicked off center, causing the slide to "read" as though the dispensing occurred off-center. Such off-center locations of the sample can interfere with accurate detection of the concentration of the analyte in question.

Accordingly, prior to this invention the problem has been to prevent "tip flick" by some mechanism.

It is therefore an object of the present invention to provide a probe structure which drastically reduces the amount of "tip flick" which can occur.

More specifically, in accordance with one aspect of the present invention, there is provided an aspirator probe for aspirating and dispensing liquid comprising:-

a housing;
a support shaft mounted within the housing; and
a tip-mounting surface connected to the shaft for a disposable tip, the tip having a seating surface and a dispensing orifice, the support shaft being disposed generally vertically and including pivotable compliant means for allowing for horizontal displacement of the tip at a dispensing station, the exterior surface of the tip adjacent to its seating surface acting as a fulcrum for inadvertent tip-pivoting at the dispensing station, causing a horizontal displacement of the dispensing orifice of the tip;

characterized in that the compliant means is pivoted vertically along the support shaft at a point from the tip mounting surface which is at least five times the length of the tip from its seating surface to the tip orifice so that the horizontal displacement of the orifice due to the inadvertent pivoting is minimized.

Accordingly, it is an advantageous feature of the invention that, through the use of a much longer pivot arm, the amount of "tip flick" is drastically reduced.

For a better understanding of the present invention, reference will now be made, by way of example only, to the accompanying drawings in which:-

Figure 1 is a fragmentary perspective view of a conventional aspirator probe, a sample supply station, and dispensing station for dispensing liquid on to a slide element in an analyzer;
Figure 2 is a fragmentary sectioned elevational view of a portion of the probe shown in Figure 1 which further illustrates the problem to be solved by the present invention;
Figure 3 is an elevational view similar to that shown in Figure 2, but illustrating the improvement of the present invention; and
Figure 4 is a diagrammatic analysis of the way in which the objective is achieved by the present invention.

The invention is described hereinafter with respect to certain preferred embodiments, wherein the aspirator is used in a clinical analyzer to aspirate and dispense biological liquid on to a slide element such as those available from Eastman Kodak Company under the trademark "Ektachem" slides.

In addition, the invention is applicable to any vertically operated aspirator probe, whether in an analyzer or not and regardless of what receives the dispensed liquid, if it is desired that the dispensing be done at a predetermined location on that which receives it.

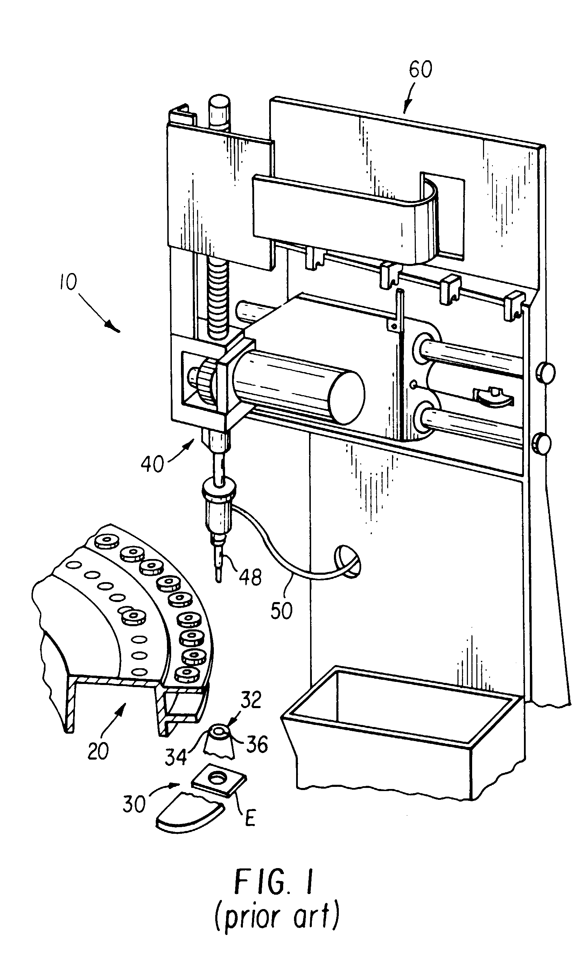

Figure 1 illustrates both the preferred environment of use (in a clinical analyzer), as well as the above-mentioned prior art. Figure 1 shows an analyzer 10 conventionally includes a sample supply station 20; a liquid dispensing station 30; an aspirator probe 40 having a disposable tip 48; means for controlling the vacuum and pressure in the probe, including an air hose 50; and a mechanism 60 for raising and lowering the probe and traversing it from sample supply station 20 to the dispensing station 30 where it is shown as being located. For further details of these stations and the mechanism can be found in US-A-4 340 390.

It will be readily apparent that, to dispense liquid on to a slide E held at station 30, probe 40 is lowered until tip 48 enters into station 30 where it is seated. To that end, a tip locator cone 32 is provided at station 30, with a tip-seating surface 34 at the top and an entrance orifice 36.

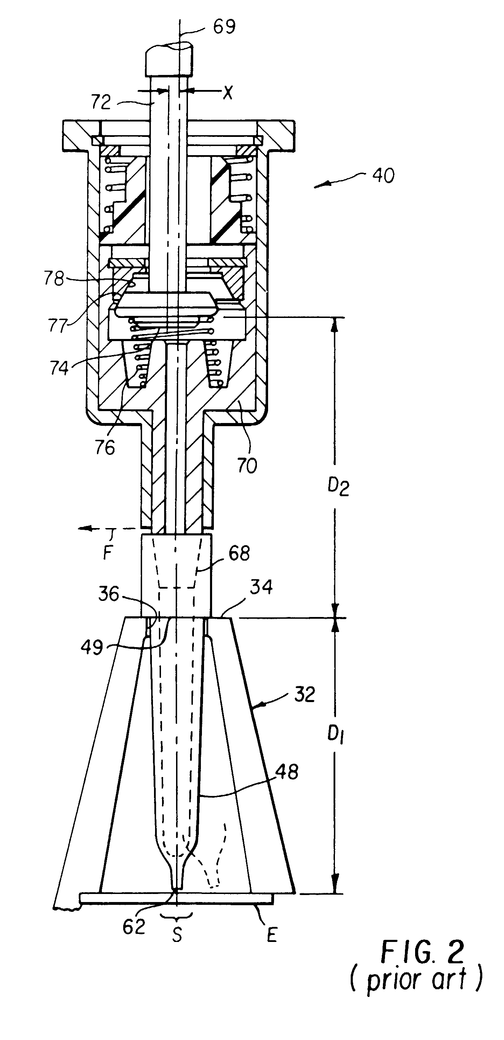

Further details of the tip locator are shown in Figure 2. Tip-seating surface 34 is located a fixed distance $D_1$ from slide element E such that end 62 of tip 48 is spaced a predetermined distance from slide element E. Orifice 36 acts to confine tip 48 in the horizontal plane, that is, precisely over the spot "S" on element E on to which the liquid is to be dispensed.

Probe 40 conventionally mounts tip 48 at cone end 68. Probe 40 further includes a mechanism that provides both horizontal compliance and vertical compliance, to adjust for positional errors vis-a-vis locator 32. That is, probe 40 comprises an exterior housing 70 which loosely surrounds probe shaft 72 and which is biased away from end 74 of shaft 72 by a compression spring 76. End 74 in turn is cone-shaped at 77 to allow it to seat in a matching cone surface 78 which is part of housing 70 when spring 76 has expanded as much as it can.

As a result, a horizontal positional error X can occur for shaft 72, off the axis 69 of housing 70, when the probe seats in tip locator 32. This error does not immediately affect the dispensing, due to the constraint provided for by orifice 36. It is, however, a pending error, which makes itself apparent as soon as probe 40 starts to rise from locator 32 after dispensing. That is, tip 48 has its own seating surface 49 which mates with surface 34, as shown. When probe 40 starts to rise and surface 49 starts to release from surface 34, spring 76 starts to recenter shaft housing 70 on to shaft 72 to get rid of error X. This in turn creates a pivot force F as shown, which causes tip 48 to pivot to the right (as shown in phantom) about its surface 49, with a pivot arm $D_1$ about the fulcrum provided by surface 34. The total distance pivoted is controlled by the length of the displacement arm shown as $D_2$, which in turn is measured between the fulcrum of surface 34 and the seat of spring 76 on end 74.

It turns out that distances $D_1$ and $D_2$ are approximately equal, that is, arm $D_2$ which induces the pivoting to account for error X is about equal to the length of tip 48 measured from surface 49.

The pivoting of the tip as shown in phantom causes what is known as "tip flick" in those instances in which the liquid already dispensed has not been completely absorbed by the test element.

In accordance with the present invention, "tip flick" is minimized by drastically extending the length of arm $D_2$ so that it equals at least five times the length $D_1$, hereinafter $\ell$ of tip 48 measured from its fulcrum surface.

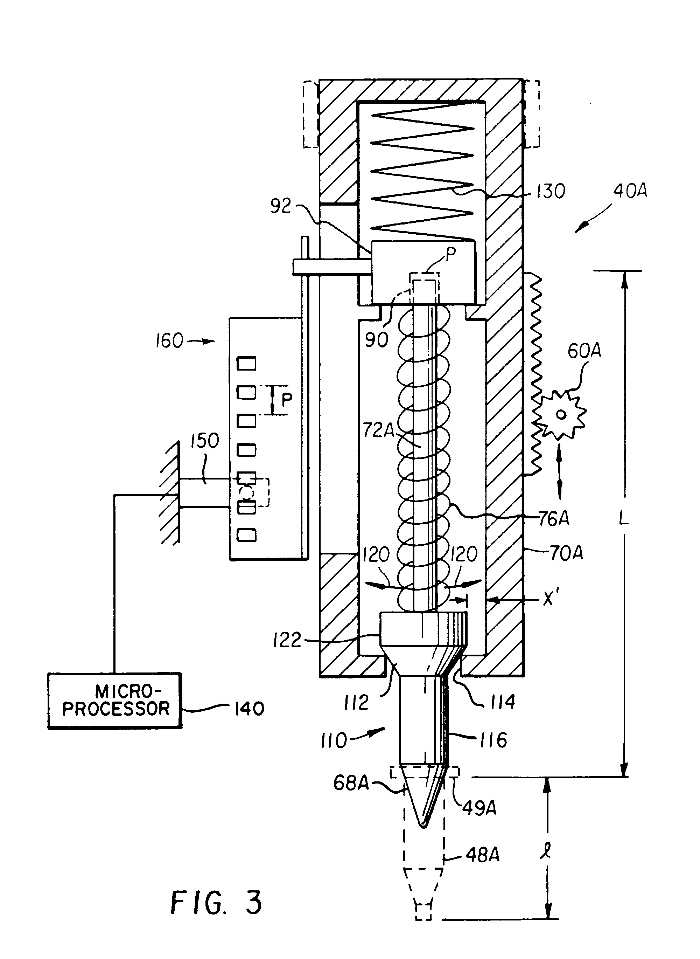

Referring now to Figure 3, a construction is shown which replaces the probe of Figures 1 and 2, except that the same or similar mechanism (60A) is used to provide vertical and horizontal displacement of the probe, as needed. Parts similar to those previously described bear the same reference numeral, to which the distinguishing letter "A" is appended.

Thus, probe 40A mounts a disposable tip 48A on a cone surface 68A, with a housing 70A which loosely surrounds a shaft 72A generally as described above for the prior art probe. However, unlike the prior art, shaft 72A is seated in a depression 90 in a block 92 and the vertical compliance is due to a compression spring 76A surrounding most of shaft 72A. The intersection of block 92 by shaft 72A creates the pivot point for the entire probe down to and including tip 48A which is essentially a rigid arm. A cone 110 is mounted on the end of shaft 72A, with a conical surface 112 which mates with an opening 114 when spring 76A is fully extended. However, cone 110 has a cylindrical portion 116 which is considerably smaller than the opening 114, so that when cone 110 is pushed up against spring 76A by the tip locator (not shown) at the dispensing station, shaft 72A is free to pivot, in the direction indicated by arrows 120, about pivot point P in depression 90, until cone 110 strikes either opening 114 with cylindrical portion 116, or the inside of housing 70A with upper portion 122 connected to cone surface 112. The horizontal extent of the pivoting, as shown by arrows 120, introduces the pending displacement error X' which may or may not be the same quantitative value as error X of the prior art. However, this error is controlled now by a pivot arm L, measured from fulcrum surface 49A of the tip, all the way back to pivot point P, which is at least five times the tip length $\ell$ measured from that same fulcrum surface. (Figure 3 has been fore-shortened for ease of drawing, so that L does not appear to be quite as much as $5 \times \ell$.)

Because shaft 72A, cone 110 and tip 48A comprise one rigid arm, any displacement error X' which does occur will of course misalign the axis of this rigid arm slightly off vertical. However, the small amount which this disturbs tip 48A from being vertical is of no consequence to the performance of the tip.

The other features of Figure 3, including compression spring 130, microprocessor 140, sensor 150 and flag 160, are optional and not part of this invention, but are as described in co-pending European patent application no. 93202783 filed concurrently herewith and corresponding to commonly owned US patent application serial no. 954632. They are shown to illustrate that some sensing mechanism is preferred to allow the probe to sense when it and its tip 48A has descended the proper distance to pick up a tip, and preferably, only a tip. The sensing is a function of the movement of flag 160 past the sensor 150. Flag 160 ceases movement when cone 110 ceases movement (shaft 72A having bottomed out in depression 90 and housing 70A continues to advance against spring 130. Detection of the cessation, coupled with the number of flag windows which have gone past the sensor 150, informs the microprocessor how far the probe has descended.

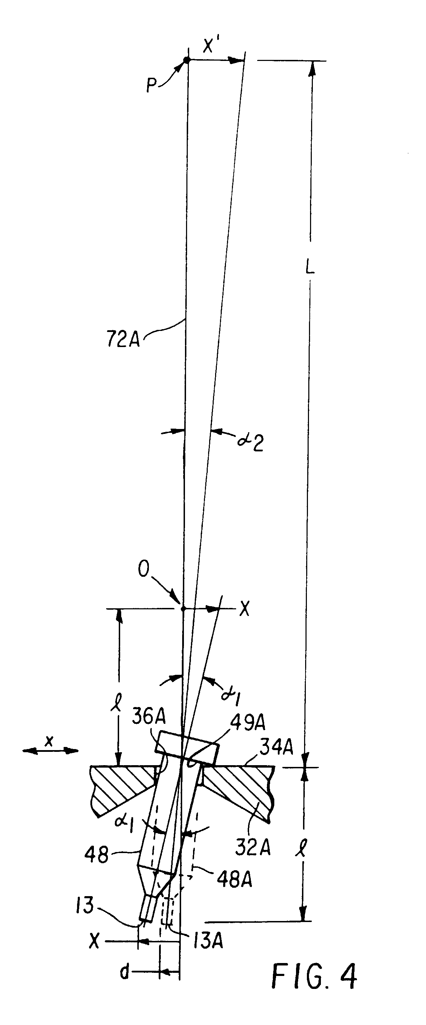

The manner in which error X' expresses itself, and the advantage of the present invention, are further apparent from Figure 4. The prior art construction is shown in solid lines for tip 48, by way of comparison. That is, displacement error X at pivot point O, due to the construction shown in Figure 2, becomes translated into displacement error X and a significant "tip flick", at tip aperture 13, given that arm $\ell$ is about equal to overall length $\ell$ of the tip measured from surface 49A.

In this invention, as with the prior art analyzer, tip 48A is seated in tip locator 32A and is constrained in the x direction by opening 36A of locator 32A. Tip surface 49A and locator surface 34A are the pivotal or fulcrum surfaces. Misalignment of the probe with locator 32A causes a displacement error X' of cone 110, Figure 3, of up to 0.8mm.

As the probe of the present invention lifts up from the tip locator 32A, compliant spring 76A (Figure 3) causes shaft 72A to pivot about point P to return the shaft to its vertical orientation and recover the pending error X'. Tip 48A (shown in phantom, Figure 4) pivots on surface 34A to allow this, and this creates tip movement d, the actual displacement error resulting from the "pending" error X'. This movement d gives a reduced amount of "tip flick".

Since the displacement error of the invention which can occur is X', which can be equal to X of Figure 2, the amount of pivoting, Figure 4, which can occur once the tip unseats, provides a new pivot angle $\alpha_2$, smaller than $\alpha_1$ of the prior art, which can be defined as:

$$\tan \alpha_2 = X'/L = X/5\ell$$

where L is at least 5 x $\ell$. But, the "tip flick" distance d with the present invention, for tip 13A, also fits the equation:

$$\tan \alpha_2 \approx d/\ell.$$

Hence, $X/5\ell \approx d/\ell$, so that d clearly $\leq 1/5$ X, or no more than one-fifth the amount the tip tends to "flick" in the conventional design.

A highly preferred example is one in which $\ell \leq 1/5.7$ X, because L = 5.7$\ell$.

The invention disclosed herein may be practised in the absence of any element which is not specifically disclosed herein.

## Claims

1.  An aspirator probe (40A) for aspirating and dispensing liquid comprising:-

    a housing (70A);
    a support shaft (72A) mounted within the housing (70A); and
    a tip-mounting surface (68A) connected to the shaft (72A) for a disposable tip (48A), the tip (48A) having a seating surface (49A) and a dispensing orifice (13A), the support shaft (72A) being disposed generally vertically and including pivotable compliant means (76A) for allowing for horizontal displacement of the tip (48A) at a dispensing station, the exterior surface of the tip (48A) adjacent to its seating surface (49A) acting as a fulcrum for inadvertent tip-pivoting at the dispensing station, causing a horizontal displacement of the dispensing orifice (13A) of the tip (48A);

    characterized in that the compliant means (76A) is pivoted vertically along the support shaft (72A) at a point (P) from the tip mounting surface (49A) which is at least five times the length of the tip (48A) from its seating surface (49A) to the tip orifice (13A) so that the horizontal displacement of the orifice (13A) due to the inadvertent pivoting is minimized.

2.  A probe according to claim 1, wherein the compliant means (76A) comprises a compression spring surrounding at least a portion of the shaft (72A).

3.  A probe according to claim 1 or 2, wherein the dispensing station includes means for holding a slide test element (E), and a tip locator (32A, 34A, 36A) into which the tip (48A) is seated, the locator (32A, 34A, 36A) having a seating surface (34A) on which the tip seating surface (49A) acts as a fulcrum when the tip (48A) is first withdrawn from the seating surface (34A) of the locator (32A, 34A, 36A).

## Patentansprüche

1.  Ansaugpipette (40A) zum Ansaugen und Ausgeben von Flüssigkeit, umfassend:

    ein Gehäuse (70A);
    eine Trägerstange (72A), die im Gehäuse (70A) angeordnet ist; und
    eine mit der Trägerstange (72A) verbundene Spitzen-Befestigungsfläche (68A) für eine austauschbare Spitze (48A), wobei die Spitze (48A) eine Sitzfläche (49A) und eine Ausgabeöffnung (13A) aufweist, die Trägerstange (72A) im allgemeinen vertikal angeordnet ist und schwenkbare, anpassungsfähige Mittel (76A) einschließt, die eine horizontale Versetzung der Spitze (48A) in einer Ausgabestation ermöglichen, die äußere, an ihre Sitzfläche (49A) angrenzende Fläche der Spitze (48A) als ein Schwenkpunkt für unbeabsichtigtes Verschwenken der Spitze (48A) in der Ausgabestation wirksam ist, was eine horizontale Versetzung der Ausgabeöffnung (13A) der Spitze (48A) verursacht,

    dadurch gekennzeichnet, daß das anpassungsfähige Mittel (76A) vertikal längs der Trägerstange (72A) an einem Punkt (P) der Spitzen-Befestigungsfläche (49A) schwenkbar gelagert ist, der mindestens der fünffachen Länge der Spitze (48A) von ihrer Sitzfläche (49A) zu der Ausgabeöffnung (13A) der Spitze (48A) entsprechend entfernt liegt, so daß die horizontale Versetzung der Ausgabeöffnung (13A) aufgrund der unbeabsichtigten Schwenkbewegung möglichst gering ist.

2. Pipette gemäß Anspruch 1, wobei das anpassungsfähige Mittel (76A) eine Druckfeder (76A) umfaßt, die zumindest einen Teil der Trägerstange (72A) umgibt.

3. Pipette gemäß Anspruch 1 oder 2, wobei die Ausgabestation Mittel zum Halten eines Objektträger-Prüfelementes (E) sowie eine Spitzen-Positioniervorrichtung (32A, 34A, 36A) umfaßt, in die eine Spitze (48A) einsetzbar ist, wobei die Positioniervorrichtung (32A, 34A, 36A) eine Sitzfläche (34A) aufweist, die auf die Sitzfläche (49A) der Spitze (48A) als Stützpunkt wirkt, wenn die Spitze (48A) von der Sitzfläche (34A) der Positioniervorrichtung (32A, 34A, 36A) anfänglich zurückgezogen wird.

**Revendications**

1. Sonde d'aspiration (40A) pour aspirer et distribuer du liquide, comprenant :

   un boîtier (70A) ;
   un arbre support (72A) monté dans le boîtier (70A) ; et
   une surface (68A) liée à l'arbre (72A) pour montage d'un embout jetable (48A), l'embout (48A) ayant une surface d'appui (49A) et un orifice de distribution (13A), l'arbre support (72A) étant généralement disposé verticalement et incluant un moyen élastique pivotant (76A) pour permettre un déplacement horizontal de l'embout (48A) sur la station de distribution, la surface externe de l'embout (48A) adjacente à sa surface d'appui (49A) agissant comme un point d'appui en cas de pivotement involontaire de l'embout venant de la station de distribution, produisant un déplacement horizontal de l'orifice de distribution (13A) de l'embout (48A) ;

   caractérisé en ce que le moyen élastique (76A) pivote verticalement le long de l'arbre support (72A) autour d'un point (P) situé à une distance de la surface d'appui (49A) égale à au moins cinq fois la longueur de l'embout (48A), comptée depuis sa surface d'appui (49A) jusqu'à l'orifice de l'embout (13A), de telle sorte que le déplacement horizontal de l'orifice (13A) produit par le pivotement involontaire soit minimisé.

2. Sonde selon la revendication 1, dans laquelle le moyen élastique (76A) comprend un ressort de compression enveloppant au moins une partie de l'arbre (72A).

3. Sonde selon les revendications 1 ou 2, dans laquelle la station de distribution inclut un moyen pour tenir un élément d'essai à lame (E), et un réceptacle d'embout (32A, 34A, 36A), ayant une surface d'appui (34A) sur laquelle la surface d'appui de l'embout (49A) agit comme un point de rotation lorsque l'embout (48A) commence à se dégager de la surface d'appui (34A) du réceptacle (32A, 34A, 36A).

FIG. 1
(prior art)

FIG. 2
( prior art )

FIG. 3

FIG. 4